# EUROPÄISCHE PATENTANMELDUNG

(11) **EP 2 400 261 A1**
(43) Veröffentlichungstag der Anmeldung: **28.12.2011**
(21) Anmeldenummer: 10166672.5
(22) Anmeldetag: 21.06.2010
(51) Int. Cl.: G01B 11/25

(54) **Optisches Messverfahren und Messsystem zum Bestimmen von 3D-Koordinaten auf einer Messobjekt-Oberfläche**

(71) Anmelder: Leica Geosystems AG, 9435 Heerbrugg (CH)
(72) Erfinder: Siercks, Knut, 9402 Mörschwill (CH)
(74) Vertreter: Harmann, Bernd-Günther

(57) **Zusammenfassung**

Die Erfindung betrifft ein optisches Messverfahren zum Bestimmen von 3D-Koordinaten von einer Vielzahl von Messpunkten einer Messobjekt-Oberfläche (1s).

Dafür erfolgen ein Beleuchten der Messobjekt-Oberfläche (1s) mit einer Muster-Sequenz aus unterschiedlichen Mustern (2a,2b) durch einen Projektor (3), ein Aufnehmen einer Bild-Sequenz von der mit der Muster-Sequenz beleuchteten Messobjekt-Oberfläche (1s) mit einem Kamerasystem (4), und ein Bestimmen der 3D-Koordinaten der Messpunkte durch Auswerten der Bild-Sequenz, insbesondere wobei eine Folge von Helligkeitswerten für identische Messpunkte der Messobjekt-Oberfläche (1s) in jeweiligen Bildern der aufgenommenen Bild-Sequenz ermittelt wird.

Erfindungsgemäss werden dabei beim Aufnehmen der Bild-Sequenz translatorische und/oder rotatorische Beschleunigungen des Projektors (3), des Kamerasystems (4) und/oder des Messobjekts (1) gemessen und die gemessenen Beschleunigungen beim Bestimmen der 3D-Koordinaten berücksichtigt.

## Beschreibung

Die Erfindung betrifft ein optisches Messverfahren zum Bestimmen von 3D-Koordinaten von einer Vielzahl von Messpunkten einer Messobjekt-Oberfläche nach dem Oberbegriff des Anspruchs 1 sowie ein zu selbigem Zweck ausgebildetes Messsystem nach dem Oberbegriff des Anspruchs 9.

Derartige Vorrichtungen und Verfahren werden insbesondere im Maschinenbau, Automobilbau, Keramikindustrie, Schuhindustrie, Schmuckindustrie, Dentaltechnik und Humanmedizin (Orthopädie) und weiteren Bereichen verwendet und kommen beispielsweise zum Einsatz für die Vermessung und Protokollierung für Qualitätskontrolle, Reverse Engineering, Rapid Prototyping, Rapid Milling oder Digital Mock-Up.

Die steigenden Forderungen nach einer weitgehend vollständigen Qualitätskontrolle im laufenden Produktionsprozess sowie nach der Digitalisierung der Raumform von Prototypen machen die Aufnahme von Oberflächentopografien zu einer immer häufiger gestellten Messaufgabe. Dabei stellt sich die Aufgabe, die Koordinaten einzelner Punkte der Oberfläche der zu vermessenden Gegenstände in kurzer Zeit zu bestimmen.

Aus dem Stand der Technik bekannte, Bild-Sequenzen verwendende Messsysteme zur Bestimmung von 3D-Koordinaten von Messobjekten, die beispielsweise als portable, handhaltbare und/oder fest installierte Systeme ausgebildet sein können, weisen dabei im Allgemeinen einen Musterprojektor zur Beleuchtung des Messobjekts mit einem Muster auf und werden daher teilweise auch als musterprojizierende 3D-Scanner oder Lichtstrukturen-3D-Scanner bezeichnet. Das auf die Oberfläche des Messobjekts projizierte Muster wird von einem Kamerasystem als weiterer Bestandteil des Messsystems aufgenommen.

Im Rahmen einer Messung beleuchtet also der Projektor das Messobjekt zeitlich sequentiell mit unterschiedlichen Mustern (z.B. parallele helle und dunkle Streifen unterschiedlicher Breite, insbesondere kann auch eine Drehung des Streifenmusters z.B. um 90° erfolgen). Die Kamera(s) registrieren das projizierte Streifenmuster unter einem bekannten Blickwinkel zur Projektion. Für jedes Projektionsmuster wird mit jeder Kamera ein Bild aufgenommen. Für jeden Bildpunkt aller Kameras entsteht so eine zeitliche Folge von unterschiedlichen Helligkeitswerten.

Projiziert werden können dabei ausser Streifen jedoch auch entsprechende andere Muster, wie beispielsweise Random Patterns, Pseudocodes, etc. Dafür geeignete Muster sind aus dem Stand der Technik dem Fachmann hinlänglich bekannt. Pseudocodes ermöglichen z.B. eine leichtere absolute Zuordnung von Objektpunkten, was bei der Projektion sehr feiner Streifen zunehmend schwieriger wird. Zu diesem Zweck kann also entweder in schneller Folge zunächst ein oder mehrere Pseudocodes und danach ein feines Streifenmuster oder auch in aufeinander folgenden Aufnahmen verschiedne, in der Abfolge feiner werdende Streifenmuster projiziert werden, bis die gewünschte Genauigkeit in der Auflösung von Messpunkten auf der Messobjekt-Oberfläche erreicht ist.

Die 3D-Koordinaten der Messobjekt-Oberfläche können dann aus der aufgenommenen Bild-Sequenz mittels Bildverarbeitung nach dem Fachmann auf diesem Gebiet bekannten Verfahren aus der Photogrammetrie und/oder Streifenprojektion berechnet werden. Beispielsweise sind derartige Messverfahren und Messsysteme beschrieben in der WO 2008/046663, der DE 101 27 304 A1, der DE 196 33 686 A1 oder der DE 10 2008 036 710 A1.

Im Üblichen besteht das Kamerasystem aus einer oder mehreren digitalen Kameras, die sich während einer Messung in bekannter räumlicher Lage zueinander befinden. Zur Gewährleistung einer stabilen Lage der Kameras relativ zueinander sind diese meist fix mit bekannter räumlicher Positionierung und Ausrichtung zusammen in einem gemeinsamen Gehäuse integriert, insbesondere wobei die Kameras derart ausgerichtet sind, dass sich die Sichtfelder der einzelnen Kameras grösstenteils überschneiden. Oft werden dabei zwei oder drei Kameras verwendet. Der Projektor kann dabei fest mit dem Kamerasystem verbunden sein (im Falle der Verwendung von getrennten Kameras auch nur mit einem Teil der vorhandenen Kameras des Kamerasystems) oder auch komplett getrennt vom Kamerasystem positioniert werden.

Die gesuchten dreidimensionalen Koordinaten der Oberfläche werden im allgemeinen Fall, d.h. im Fall dass relative Positionierung und Ausrichtung von Projektor zum Kamerasystem fix zueinander und daher nicht vorab schon bekannt ist, in zwei Schritten berechnet. In einem ersten Schritt werden dann die Koordinaten des Projektors wie folgt bestimmt. Zu einem gegebenen Objektpunkt sind die Bildkoordinaten im Kamerabild bekannt. Der Projektor entspricht einer umgekehrten Kamera. Aus der Folge von Helligkeitswerten, die aus der Bildsequenz für jeden Kamerabildpunkt gemessen wurden, kann die Nummer des Streifens berechnet werden. Im einfachsten Fall erfolgt das über einen Binärkode (z.B. einen Gray-Code) der die Nummer des Streifens als diskrete Koordinate im Projektor kennzeichnet. Eine höhere Genauigkeit ist mit dem so genannten Phasenschiebeverfahren zu erreichen, da es eine nicht diskrete Koordinate bestimmen kann. Es kann entweder als Ergänzung eines Gray-Codes oder als absolut messendes Heterodynverfahren eingesetzt werden.

Nach solcherart bestimmter Position des Projektors oder bei bereits vorab bekannter Position desselben relativ zum Kamerasystem können nun - z.B. durch die Methode des Vorwärtsschnitts - wie folgt 3D-Koordinaten von Messpunkten auf der Messobjekt-Oberfläche ermittelt werden. Die Streifennummer im Projektor entspricht der Bildkoordinate in der Kamera. Die Streifennummer spezifiziert eine Lichtebene im Raum, die Bildkoordinate einen Lichtstrahl. Bei bekannter Kamera und Projektorposition kann der Schnittpunkt der Ebene und der Gerade berechnet werden. Das ist die gesuchte dreidimensionale Koordinate des Objektpunktes im Koordinatensystem des Sensors. Die geometrische Lage aller Bildstrahlen muss genau bekannt sein. Die exakte Berechnung der Strahlen erfolgt mit dem aus der Photogrammetrie bekannten Vorwärtsschnitt.

Zur Erzielung von höheren Genauigkeiten bei diesem Messverfahren für die Berechnung der 3D-Koordinaten können die nicht idealen Eigenschaften von realen Linsensystemen, die in Verzerrungen des Bildes resultieren, durch eine Verzeichnungskorrektur angepasst werden und/oder eine präzise Kalibrierung der Abbildungseigenschaften erfolgen. Alle Abbildungseigenschaften von Projektor und Kameras können dabei im Rahmen von dem Fachmann bekannten Kalibrierungsprozessen (z.B. einer Serie von Kalibrieraufnahmen) gemessen und daraus ein mathematisches Modell zur Beschreibung dieser Abbildungseigenschaften generiert werden (z.B. werden aus der Serie von Kalibrieraufnahmen mit photogrammetrischen Methoden - insbesondere mit einer Bündelausgleichsrechnung - die die Abbildungseigenschaften bezeichnende Parameter bestimmt).

Zusammengefasst ist also bei dem Musterprojektionsverfahren bzw. bei Lichtstrukturen-3D-Scanner eine Beleuchtung des Objekts mit einer Sequenz von Lichtmustern erforderlich, um eine eindeutige Tiefenbestimmung der Messpunkte im Messbereich mit Hilfe von Triangulation (Vorwärtsschnitt) zu ermöglichen. Es sind also meist mehrere Aufnahmen (d.h. eine Serie von Bildern) unter Beleuchtung des Messobjekts mit entsprechenden unterschiedlichen Muster-Projektionen (d.h. mit einer entsprechenden Serie von Mustern) notwendig, um eine hinlänglich hohe Genauigkeit bezüglich des Messergebnisses zu gewährleisten. Bei aus dem Stand der Technik bekannten handgehaltenen Systemen, wie beispielsweise bei der in der WO 2008/046663 beschriebenen Messvorrichtung, muss die Beleuchtungssequenz dabei derart schnell erfolgen, dass eine Bewegung durch den Bediener während des Aufnehmens der Serie von Bildern nicht zu Messfehlern führt. Die durch die Kameras aufgenommenen Bildpunkte der jeweiligen Projektion müssen hinreichend gut untereinander zugeordnet werden können. Somit muss die Bildsequenz schneller als die durch den Bediener verursachte Muster- oder Bildverschiebung erfolgen. Da die emittierbare optische Energie des Projektors durch die verfügbaren optischen Quellen und durch Strahlenschutzbestimmungen begrenzt ist, führt dies zu einer Limitierung der detektierbaren Energie im Kamerasystem und somit zu einer Limitierung der Messung auf schwach reflektierenden Messobjekt-Oberflächen. Weiterhin sind die Projektoren in der Projektionsgeschwindigkeit (Bildrate) begrenzt. Übliche maximale Bildraten solcher Projektoren liegen beispielsweise um 60 Hz.

Für einen Messvorgang mit Projizieren einer Serie von Patterns und Aufnehmen einer Bild-Sequenz der jeweiligen Patterns mit dem Kamerasystem ist mit herkömmlichen Messvorrichtungen z.B. eine Messdauer von etwa 200 ms nötig (als Beispiel: für die Aufnahme von Sequenzen von 8 bis 10 Bildern bei einer Belichtungsdauer 20 ms bis 40 ms pro Bild können sich z.B. Gesamtaufnahmezeiten bzw. Messdauern von zwischen 160 ms und 400 ms pro Messposition ergeben).

Bei nicht hinlänglichem Ruhighalten bzw. bei nicht hinlänglich hoher Positions- und Ausrichtungshaltigkeit der Kameraanordnung, des Projektors (bzw. ggf. eines die Kameraanordnung und den Projektor integriert beinhaltenden Messkopfes) und des Messobjekts relativ zueinander während eines Messvorgangs (in einer Messposition) kann es somit zu verschiedenen unerwünschten und die Auswertung erschwerenden, verkomplizierenden, gar verunmöglichenden oder zumindest die erzielbare Genauigkeit negativ beeinflussenden Effekten kommen.

Für ein unzulängliches Nichtruhighalten der Kameraanordnung, des Projektors (bzw. ggf. eines die Kameraanordnung und den Projektor integriert beinhaltenden Messkopfes) oder des Messobjekts können dabei unterschiedliche Ursachen infrage kommen.

Zum einen können Vibrationen in der Messumgebung (z.B. falls die Messungen an einer in eine Produktionsstrasse integrierten Produktionsstation durchgeführt werden) auf die Halterung des Messobjekts oder auch einen den Messkopf haltenden Roboterarm übertragen werden und somit zu störenden Schwingungen führen. Daher sind bisher aufwändige Massnahmen zur Schwingungsdämpfung nötig oder es ist ein Ausweichen auf spezielle Messräume erforderlich, was jedoch den Produktionsprozess deutlich aufwändiger gestaltet (da ein Entnehmen des Messobjekts aus der Produktionsstrasse und ein Transportieren desselben in den entsprechend dafür ausgelegten Messraum erforderlich ist).

Bei handgehaltenen Systemen ist die Hauptursache für unzulängliches Nichtruhighalten insbesondere der natürliche Tremor in der Hand des menschlichen Benutzers.

Als negative Effekte, die durch mangelnde Positions- und Ausrichtungshaltigkeit der Kameraanordnung, des Projektors und des Messobjekts relativ zueinander bewirkt werden können, sind - zum einen - eine Bewegungsunschärfe und/oder Verwacklungen in einzelnen aufgenommenen Bildern einer Bild-Sequenz zu nennen.

Zum anderen können jedoch auch Unkonformitäten der einzelnen Bilder einer Bild-Sequenz zueinander bezüglich deren jeweiligen Aufnahmepositionen und -richtungen relativ zum Messobjekt (d.h. Schwankungen in den Aufnahmepositionen und -richtungen bei den einzelnen Bildern innerhalb einer Bild-Sequenz) auftreten, sodass ein jeweiliges Zuordnen von Bildpunkten in den einzelnen Bildern zu identischen Messpunkten auf der Messobjekt-Oberfläche entweder ganz verunmöglicht ist oder nur durch enorm hohen Rechenaufwand und Miteinbeziehen von Informationen aus einer Vielzahl von Bildern desselben Bereichs der Messobjekt-Oberfläche ermöglicht werden kann (d.h. es kann ein sich sehr aufwändig gestaltendes nachträgliches rechnerisches in räumlichen Bezug Bringen der Einzelbilder erforderlich sein, weshalb bisher teilweise präventiv gegen diesen Effekt ein Überschuss an Bildern pro Bild-Sequenz aufgenommen werden, die hauptsächlich lediglich zum Rückrechnen des räumlichen Bezugs der Aufnahmepositionen und -richtungen der einzelnen Bilder untereinander dienen).

Zur Erweiterung des Messbereichs auf dem Messobjekt (z.B. zur Vermessung eines Objekts in seiner Gesamtheit), sind oft mehrere Messungen nacheinander (aus verschiedenen Messpositionen und unter verschiedenen Blickwinkeln der Kameras relativ zum Messobjekt) erforderlich, wobei die Ergebnisse der verschiedenen Messungen anschliessend miteinander verknüpft werden. Dies kann beispielsweise dadurch erfolgen, dass bei den jeweiligen Messvorgängen die Erfassungsbereiche jeweils überlappend gewählt werden und der jeweilige Überlapp zum entsprechenden Zusammenfügen der bei mehreren Messvorgängen gewonnenen 3D-Koordinaten (d.h. Punktwolken) verwendet wird (d.h. es können identische oder ähnliche Verteilungen in den bei den einzelnen Messvorgängen bestimmten Punktwolken identifiziert und dementsprechend die Punktwolken zusammengefügt werden).

Dieser Zusammenfügungsvorgang ist im Allgemeinen jedoch extrem rechenintensiv und bedarf sogar bei Verfügbarkeit von höchsten Prozessorleistungen dennoch einen nicht zu verachtenden und störend hohen Zeit- und Energieaufwand. Bei Verwendung z.B. eines Roboterarms zum Halten und Führen des Messkopfes kann etwa dadurch eine Reduzierung des für den Zusammenfügungsvorgang erforderlichen Rechenaufwands erreicht werden, indem die Aufnahmepositionen und - richtungen bei den einzelnen Messungen anhand der jeweiligen Roboterarmstellung erfasst und diese für das Zusammenfügen als Vorinformation (z.B. als Randbedingungen) herangezogen werden.

Nachteile hierbei sind die verhältnismässig geringe Genauigkeit mit welcher anhand der Roboterarmstellung die Messposition bestimmbar ist und - gleichwohl - das Erfordernis des Vorhandenseins eines solchen Roboterarms. So kann die Rechenleistung, die für das Zusammenfügen von Messergebnissen mehrerer Messvorgänge erforderlich ist, für handgehaltene Messsysteme nicht auf diese Weise reduziert werden.

Weiterer Nachteile von Systemen des Standes der Technik, welche zur Musterbeleuchtung im Wesentlichen kohärente optische Strahlung verwenden, sind - durch ungewollt auftretende Specklefelder in den jeweiligen Mustern der Muster-Sequenz hervorgerufene - lokale Messungenauigkeiten oder Messpunkt-Lücken.

Die der Erfindung zugrunde liegende technische Aufgabe ist daher das Bereitstellen eines verbesserten, Bild-Sequenzen verwendenden optischen Messverfahrens und Messsystems zum Bestimmen von 3D-Koordinaten auf einer Messobjekt-Oberfläche, insbesondere wobei ein oder mehrere der zuvor beschriebenen Nachteile vermindert oder behoben werden können.

Spezifischere Aufgaben der Erfindung sind dabei das Ermöglichen einer präziseren Bestimmung von 3D-Koordinaten auch bei für aus dem Stand der Technik bekannte Messsysteme unzulänglicher Positionshaltigkeit des Projektors, des Kamerasystems und/oder des Messobjekts (z.B. durch unerwünschte Schwingungen, Vibrationen oder Unruhighalten) während des Messvorgangs (d.h. während des Mustersequenzprojizierens und der Bildsequenzaufnahme). Im Speziellen sollen dabei - zum einen - auf Verwackelungen und/oder Bewegungsunschärfen in den Einzelbildern einer Bild-Sequenz zurückzuführende Fehler oder Ungenauigkeiten in der Bestimmung der 3D-Koordinaten verringert werden können. Zum anderen sollen auch Fehler verringert oder eliminiert werden können, die auf bei Unruhighalten auftretenden Aufnahmepositions- und -richtungsschwankungen bei den Bildern einer Bild-Sequenz untereinander zurückzuführen sind.

Eine weitere spezifische Aufgabe bei Verwendung einer kohärenten Quelle zum Projizieren der Muster ist das Verringern der durch auftretende Speckle im Muster auf der Messobjekt-Oberfläche hervorgerufenen lokalen Messlücken oder lokalen Messungenauigkeiten.

Eine weitere spezifische Aufgabe - besonders für handgehaltene Messsysteme - ist das Vereinfachen des Zusammenfügens von Messergebnissen (z.B. daraus erzeugten Punktwolken) mehrerer Messvorgänge und/oder das Ermöglichen einer Reduzierung der für ein solches Zusammenfügen erforderlichen Rechenleistung.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein musterprojizierendes und Bild-Sequenzen verwendendes Messverfahren zum Bestimmen von 3D-Koordinaten einer Messobjekt-Oberfläche sowie ein zu selbigem Zweck ausgebildetes Messsystem.

Im Rahmen der Erfindung werden dabei während eines Messvorgangs - d.h. beim Aufnehmen der Bild-Sequenz - anhand von Inertialsensoren translatorische und/oder rotatorische Beschleunigungen des Musterprojektors, des Kamerasystems (bzw. ggf. eines die Kameraanordnung und den Projektor integriert beinhaltenden Messkopfes) und/oder des Messobjekts gemessen und die gemessenen Beschleunigungen beim Bestimmen der 3D-Koordinaten berücksichtigt.

Dafür können am Kamerasystem, am Projektor und/oder am Messobjekt die Inertialsensoren angeordnet sein, wobei die Inertialsensoren insbesondere zusammen als integrierte inertiale Messeinheit ausgebildet sind.

Je nach Ausführungsvariante des Kamerasystems und des Projektors können die Inertialsensoren dabei entsprechend in einem Komponenten des Kamerasystems und/oder des Projektors beinhaltenden Gehäuse mitintegriert sein. Das Kamerasystem (auch Kameraanordnung genannt) kann beispielsweise - wie aus dem Stand der Technik bereits bekannt - aus einer, zwei, drei, vier oder mehr Kameras aufgebaut sein, die mit fixer und bekannter Positionierung und Orientierung relativ zueinander in einem gemeinsamen Gehäuse angeordnet und zur im Wesentlichen simultan erfolgenden Aufnahme von Einzelbildern ausgebildet sind. Alternativ können einzelne Kameras der Kameraanordnung auch körperlich separat voneinander mit jeweils eigenem Gehäuse ausgeführt sein, was im Allgemeinen die Auswertung der Bild-Sequenzen jedoch erschwert, da dann der relative räumliche Bezug der Kameras zueinander nicht vordefiniert ist (wodurch sich im Normalfall ein erhöhter Rechenaufwand bei der Auswertung der Bild-Sequenzen ergibt). Zudem tritt im Fall von körperlich separat ausgeführten Kameras bei handgehaltenen Systemen die Benutzungserschwernis auf, mehrere separate Gerätschaften tragen und halten zu müssen.

Aus diesen beiden Gründen kann - insbesondere bei handhaltbaren oder zum Anbringen an einen Roboterarm ausgebildeten Systemen - das Kamerasystem zusammen mit dem Projektor mit fixer und bekannter Positionierung und Orientierung relativ zueinander körperlich in einem gemeinsamen Messkopf des Messsystems untergebracht sein, in dem dann auch erfindungsgemäss die Inertialsensoren bzw. die inertiale Messeinheit angeordnet sein kann.

Ebenso kann - alternativ oder zusätzlich - eine Gruppe von Inertialsensoren auch zum Anbringen an das zu vermessende Objekt ausgebildet sein, welche die gemessenen Beschleunigungen (oder bereits daraus abgeleitete Bewegungen oder gar Positionen und Ausrichtungen) an die Auswertereinheit des Messsystems zur Berücksichtigung bei der 3D-Koordiantenbestimmung kommuniziert.

Im Speziellen sind dabei die Inertialsensoren in einer auf MEMS-basierten Komponenten beruhenden inertialen Messeinheit (wobei MEMS für Micro-Electro-Mechanical System steht) derart kombiniert und integriert, dass die inertiale Messeinheit zur Messung der Beschleunigungen in allen sechs Freiheitsgraden ausgebildet ist, insbesondere mit einer Messrate zwischen etwa 1 und 2000 Hz, im Speziellen zwischen etwa 50 und 2000 Hz.

Wie dem Fachmann bekannt können dabei durch die entsprechende Kombination mehrerer Inertialsensoren in einer inertialen Messeinheiten (engl.: Inertial Measurement Unit (IMU)) die Beschleunigungen der sechs Freiheiten in der Regel anhand der folgenden Sensorarten gemessen werden:

Drei orthogonal angeordnete Beschleunigungssensoren (auch als Translationssensoren bezeichnet) detektieren die lineare Beschleunigung in x- bzw. y- bzw. z-Achse. Daraus kann die translatorische Bewegung (sowie die relative Position) berechnet werden. Drei orthogonal angeordnete Drehratensensoren (auch als Gyroskopische Sensoren bezeichnet) messen die Winkelbeschleunigung um die x- bzw. y- bzw. z-Achse. Daraus kann die Rotationsbewegung (sowie die relative Ausrichtung) berechnet werden.

Derartige auf MEMS-basierte Komponenten beruhende inertiale Messeinheiten, die als miniaturisierte Geräte oder Baugruppen ausgebildet sind, sind aus dem Stand der Technik bereits hinlänglich bekannt und werden schon lange in Grossserie gefertigt.

Die während eines Messvorgangs - oder zusätzlich auch zwischen mehreren Messvorgängen - erfassten Beschleunigungen des Kamerasystems, des Projektors und/oder des Messobjekts können erfindungsgemäss im Rahmen der Auswertung (z.B. im Rahmen des Bestimmens der 3D-Koordinaten der Messpunkte aus der Bild-Sequenz oder im Rahmen der Zusammenfügung von aus mehreren durchgeführten Messvorgängen gewonnenen Messergebnissen, d.h. aus mehreren Bild-Sequenzen) dabei für verschiedene Zwecke und zur Verbesserung unterschiedlicher Aspekte verwendet werden.

Werden während der Belichtungszeiten der einzelnen Bilder einer Bild-Sequenz die Beschleunigungen mit hinreichend hoher Rate (d.h. einer Rate, die zumindest einige - z.B. zwischen 5 und 50 - Beschleunigungswerte pro Belichtungsdauer eines Einzelbildes liefert), können Verwacklungen und/oder Bewegungsunschärfe im Bild provozierende Bewegungen des Projektors, des Kamerasystems und/oder des Messobjekts während der Belichtungszeiten der einzelnen Bilder der Bild-Sequenz anhand dieser gemessener Beschleunigungswerte algorithmisch berücksichtigt werden. Vorzugsweise können die gemessenen Beschleunigungswerte - nach z.B. aus der Photographie hinlänglich bekannten Verfahren - zum Kompensieren oder Korrigieren von Verwacklungen und/oder Bewegungsunschärfen in den einzelnen Bildern einer Bild-Sequenz verwendet werden.

Mangelnde Positions- und Orientierungshaltigkeit von Messsystem und Messobjekt relativ zueinander während der Belichtungszeiten der Bilder kann dabei hervorgerufen werden z.B. durch einen den Projektor, das Kamerasystem und/oder das Messobjekt handhaltenden Benutzer, insbesondere handtremorbedingt und unabsichtlich, oder durch Vibrationen oder Schwingungen in den Halterungen des Projektors, des Kamerasystems und/oder des Messobjekts.

Die erfindungsgemäss erfasste Bewegung im Raum kann also z.B. zur Korrektur von Unschärfen in den einzelnen Aufnahmen von Digitalkameras bzw. Triangulationsscannern verwendet werden. Ausserdem können bei handgehaltenen Messsystemen die durch den Tremor der Hand eines Benutzers gegebenen prinzipiellen Limitierungen aufgehoben oder zumindest vermindert werden.

Auch die bei einer stationären Installation des Messsystems oft auftretenden störenden Schwingungen/Vibrationen während Messungen können somit erfindungsgemäss - wie oben beschrieben - bei der Auswertung und beim Bestimmen der 3D-Koordinaten berücksichtigt werden. Dadurch kann z.B. auf oft baulich sehr aufwändige Vorkehrung zur Schwingungsdämpfung verzichtet werden (oder zumindest deutlich weniger aufwändige Verkehrungen vorgesehen werden), bei gleichzeitig verbesserter Genauigkeit bei der 3D-Koordinatenbestimmung oder zumindest ohne dabei Einbussen hinsichtlich der Genauigkeit hinnehmen zu müssen. Das erfindungsgemässe Messsystem eignet sich somit verbessert zum Einsatz direkt in einer Produktionslinie. Auf ein - insgesamt betrachtet - sehr aufwändiges Betreiben des Messsystems "offline" in einem speziellen Messraum (mit Entnehmen des Messobjekts aus der Produktionsstrasse und Transportieren desselben in den entsprechend dafür ausgelegten Messraum) kann - ermöglicht durch die Erfindung - im Allgemeinen verzichtet werden.

Gemäss einer Weiterbildung können die erfassten Beschleunigungen von Messsystem-Komponenten (d.h. Kameraanordnung/Projektor) und/oder des Messobjekts erfindungsgemäss auch dafür verwendet werden, um den jeweiligen Bildern einer Bild-Sequenz jeweils eine zum jeweiligen Aufnahmezeitpunkt aktuelle Bildaufnahmeposition und -richtung relativ zum Messobjekt zuzuordnen. Dafür werden während eines gesamten Messvorgangs (d.h. des gesamten Vorgangs des Aufnehmens einer Bild-Sequenz oder auch mehrerer Bild-Sequenzen) die Beschleunigungen erfasst. Insbesondere können dazu die Beschleunigungen mit einer derartigen Rate gemessen werden, dass eine hinlänglich genaue Zuordnung zu den jeweiligen Aufnahmezeitpunkten der einzelnen Bilder ermöglicht ist. Werden die Beschleunigungen mit einer deutlich höheren Rate erfasst als die Bilder sequentiell aufgenommen werden, können den jeweiligen Bildern auch jene Bildaufnahmepositionen und -richtungen zugeordnet werden, die sich aus einer Mittelung der während den Belichtungsdauern der einzelnen Bildern erfassten Beschleunigungen ergeben.

Die den einzelnen Bildern einer Bild-Sequenz zugeordneten jeweiligen Aufnahmepositionen und -richtungen zum vereinfachten Verknüpfen von Bildpunkten in den einzelnen Bildern zu identischen Messpunkten auf der Messobjekt-Oberfläche, auch im Falle dass - z.B. tremorbedingt - Schwankungen in den Aufnahmepositionen und -richtungen der einzelnen Bildern innerhalb einer Bild-Sequenz auftreten.

Der Rechenaufwand für die Auswertung einer Bild-Sequenz (der insbesondere für das Vorwärtsschnittverfahren erforderlich ist) kann erfindungsgemäss somit also deutlich reduziert werden, da abgeleitet von den Aufnahmepositionen und -richtungen vorab bestimmt werden kann, durch welche Bildpunkte in den jeweiligen Bildern der Bild-Sequenz jeweils identische Messpunkte der Oberfläche abgebildet sind.

Da bei Systemen aus dem Stand der Technik bisher teilweise ein Überschuss an Bildern pro Bild-Sequenz aufgenommen werden musste, um - vor der eigentlichen Auswertung - die Bilder zueinander durch Bildverarbeitung miteinander in einen räumlichen Bezug zu bringen, kann erfindungsgemäss nun der Rechenaufwand und/oder die erforderliche Anzahl von aufzunehmenden Bildern pro Bild-Sequenz für das vergleichbar genaue Bestimmen der 3D-Koordinaten aus dieser Bild-Sequenz reduziert werden.

Auf der anderen Seite wird durch die Erfindung jedoch nun auch ermöglicht, über längere Messzeiträume Bilder einer Bild-Sequenz aufzunehmen, da der Einfluss durch ein Nichtruhighalten von Messkomponenten während des Aufnehmens der Serie von Bildern erfindungsgemäss hinlänglich gut kompensierbar oder korrigierbar ist und nicht zu Messausfällen führt.

Um beispielsweise grössere Bereiche einer Messobjekt-Oberfläche zu vermessen, welche über den Sicht- und Musterprojektionsbereich von Kameraanordnung und Projektor hinausgehen, ist es gemäss dem Stand der Technik erforderlich, mehrere Messvorgänge durchzuführen und die Ergebnisse (z.B. Punktwolken) anschliessend anhand von überlappend gemessenen Teilbereichen aneinanderzufügen ("Stitching").

Erfindungsgemäss kann nun z.B. auch ein verhältnismässig langer Messvorgang durchgeführt werden (z.B. über 1-5 Sekunden oder länger mit fortlaufender sequentieller Aufnahme von Bildern), wobei absichtlich Projektor und Kamerasystem derart verfahren werden, dass letztendlich ein gesamter gewünschter Messbereich (z.B. das gesamte Messobjekt von allen Seiten) abgedeckt ist. Dabei sollte die Verfahrgeschwindigkeit und die Abfolge der projizierten Muster sowie die Bildaufnahmefrequenz so angepasst und ausgelegt werden, dass alle Teilbereich mit zur Auswertung hinreichend variierenden Mustern beleuchtet und davon hinreichend viele Bilder aufgenommen werden.

Anstelle von mehreren Einzelmessvorgängen mit möglichst ruhigem Positions- und Ausrichtungshalten der Kameraanordnung und des Projektors während den jeweiligen Einzelmessungen, deren Messergebnisse anschliessend rechenintensiv verknüpft werden, kann also gemäss der Erfindung auch ein fortlaufender Messvorgang "gleitend" erfolgen, und anhand der währenddessen erfindungsgemäss gemessenen Beschleunigungen die einzelnen Bildern bzgl. ihrer jeweiligen Aufnahmepositionen und -richtungen - zur Auswertung der Bild-Sequenz - in räumlichen Bezug zueinander gebracht werden.

In einer weiteren Ausführungsform der Erfindung können jedoch auch Einzelmessvorgänge durchgeführt werden, deren Messergebnisse (z.B. Punktwolken) erfindungsgemäss - mithilfe der gemessenen Beschleunigungen - unter reduziertem Rechenaufwand zusammengefügt werden können ("Stitching"). Dabei ist es nun nicht zwingend erforderlich, gewisse Teilbereiche überlappend zu vermessen, um das entsprechende Zusammenfügen der Messergebnisse überhaupt erst zu ermöglichen. Ein überlappendes Messen kann jedoch zur weiteren Steigerung der Zuverlässigkeit und Genauigkeit des Stitchings der einzelnen Messergebnisse auch im Rahmen der Erfindung dennoch so erfolgen. Die - anhand der Beschleunigungen ableitbaren - Messpositionen und -richtungen bei den jeweiligen Einzelmessvorgängen können auch z.B. verwendet werden, und um einen verbesserten Startwert für das rechnerische Verknüpfen der Punktwolken zu liefern, wenn sich dieses auf identische Punkte (Passpunkte) oder identische Muster/Geometrien bezieht (in den Überlappbereichen).

Gemäss eines weiteren Aspekts der Erfindung können die den jeweiligen Bildern zugeordneten Aufnahmepositionen und -richtungen, die aus den gemessenen Beschleunigungen abgeleitet werden, auch zum Verdichten des Messbereichs verwendet werden (sodass innerhalb eines gewissen Messbereichs für eine höhere Anzahl von Messpunkten 3D-Koordinaten bestimmt werden). Dafür kann z.B. unter geringfügiger absichtlicher Bewegung von Projektor, Kameraanordnung und/oder Messobjekt (z.B. verursacht durch den natürlichen Tremor der Hand eines Benutzers) eine Serie von Mustern auf einen Oberflächenbereich projiziert und davon eine Serie von Bildern aufgenommen werden (oder auch mehrere Serien desselben Messbereichs miteinander verknüpft werden), und - mithilfe der Beschleunigungen - die Bilder hochpräzise miteinander in räumlichen Bezug gebracht werden, sodass dadurch innerhalb eines Messbereichs mit höher Messpunktdichte 3D-Koordinaten bestimmt werden können. Insbesondere können dadurch z.B. auch im Subpixelbereich der einzelnen Bilder 3D-Koordinaten von Messpunkten auf der Oberfläche des Messobjekts bestimmt werden.

Auf ähnliche Weise ist es für Systeme, die zur Musterbeleuchtung im Wesentlichen kohärente optische Strahlung verwenden, erfindungsgemäss auch ermöglicht, die durch ungewollt auftretende Specklefelder in den jeweiligen Mustern der Muster-Sequenz hervorgerufenen negativen Auswirkungen auf die Messergebnisse (z.B. lokale Messungenauigkeiten oder Messpunkt-Lücken) zu verringern. Werden beim Messvorgang nämlich Projektor, Kameraanordnung und/oder Messobjekt geringfügig absichtlich bewegt (z.B. verursacht durch den natürlichen Tremor der Hand eines Benutzers), ändern sich auch die Specklefelder in den auf die Messobjekt-Oberfläche projizierten Mustern. In der Folge kann dadurch also auch erreicht werden, dass die Specklefelder in den jeweiligen Bildern nicht stets an identischen Stellen auf der Messobjekt-Oberfläche auftreten. Im Rahmen einer dieserart aufgenommenen Bild-Sequenz sollten also weniger oder keine Stellen vorhanden sein, welche nicht in zumindest einigen der Bilder der Bild-Sequenz mit im Wesentlichen specklefreiem Muster beleuchtet abgebildet sind. Durch die Zusammenschau der Bilder der Bild-Sequenz (wobei die Bilder wiederum erfindungsgemäss durch Verwendung der dabei gemessenen Beschleunigungen in räumlichen Bezug zueinander gebracht werden) können also die im Falle der Musterprojektion mit kohärenter optischer Strahlung durch Speckle verursachten negativen Einflüsse vermindert werden.

Zusammengefasst können gemäss der Erfindung also während eines Messvorgangs (Muster-Sequenz-Projektion und Bild-Sequenz-Aufnahme) für verschiedene Zwecke das Messobjekt, das Kamerasystem und/oder der Projektor absichtlich bewegt werden (oder die durch eine eigentlich ungewollte Bewegung verursachten negativen Auswirkungen vermindert oder behoben werden). Dafür werden die Beschleunigungen von Projektor, Kameraanordnung und/oder Messobjekt anhand Inertialsensoren gemessen und beim das Auswerten der einzelnen Bilder der Bild-Sequenz berücksichtigt.

Insbesondere kann anhand der gemessenen Beschleunigungen für jedes Bild separat eine Kompensation oder Korrektur von durch Bewegungen während der Belichtungszeit einzelner Bilder verursachten Auswirkungen (Verwacklungen/Bewegungsunschärfen) im Bild erfolgen.

Zusätzlich oder alternativ kann jedoch auch jedem Bild eine aus den Beschleunigungen (ggf. gemittelt) abgeleitete, jeweils aktuelle Aufnahmeposition und -richtung relativ zum Messobjekt (sowie ggf. eine jeweilige aktuelle Musterprojektionsposition und -richtung) zugeordnet und somit die Bilder für die aus der Bild-Sequenz erfolgende Bestimmung der 3D-Koordinaten vorab in räumlichen Bezug zueinander gebracht werden. Beispielsweise kann dann ein absichtliches Bewegen des Messobjekts, des Kamerasystems und/oder des Projektors erfolgen
- zum Vergrössern des Messbereichs auf der Messobjekt-Oberfläche,
- zum Verdichten des Messbereichs und somit zur Erhöhung der Messpunkte-Dichte auf der Messobjekt-Oberfläche
   und/oder
- zum Verändern von im Falle des Beleuchtens mit im Wesentlichen kohärenter optischer Strahlung ungewollt auftretenden Specklefeldern in den jeweiligen Mustern der Muster-Sequenz und somit zur Verringerung von durch solche Specklefelder hervorgerufene lokale Messungenauigkeiten oder Messpunkt-Lücken.

Im Speziellen kann dabei das zu diesen Zwecken erfolgende Bewegen bewirkt werden durch einen das Messobjekt bzw. das Kamerasystem handhaltenden Benutzer, und/oder eine dafür ausgelegte und vorprogrammiert automatisch oder manuell gesteuerte Halterung - insbesondere ein Roboterarm - für den Projektor, das Kamerasystem und/oder das Messobjekt.

Wiederum zusätzlich oder alternativ kann bei Durchführung von mehreren einzelnen Messvorgängen nacheinander jedoch auch jedem Messvorgang eine (ggf. gemittelte) Messposition und -ausrichtung (von Kameraanordnung, Projektor und Messobjekt relativ zueinander) zugeordnet werden und dadurch das Zusammenfügen der Ergebnisse aus mehreren Einzelmessvorgängen vereinfacht oder gar überhaupt erst ermöglicht werden.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

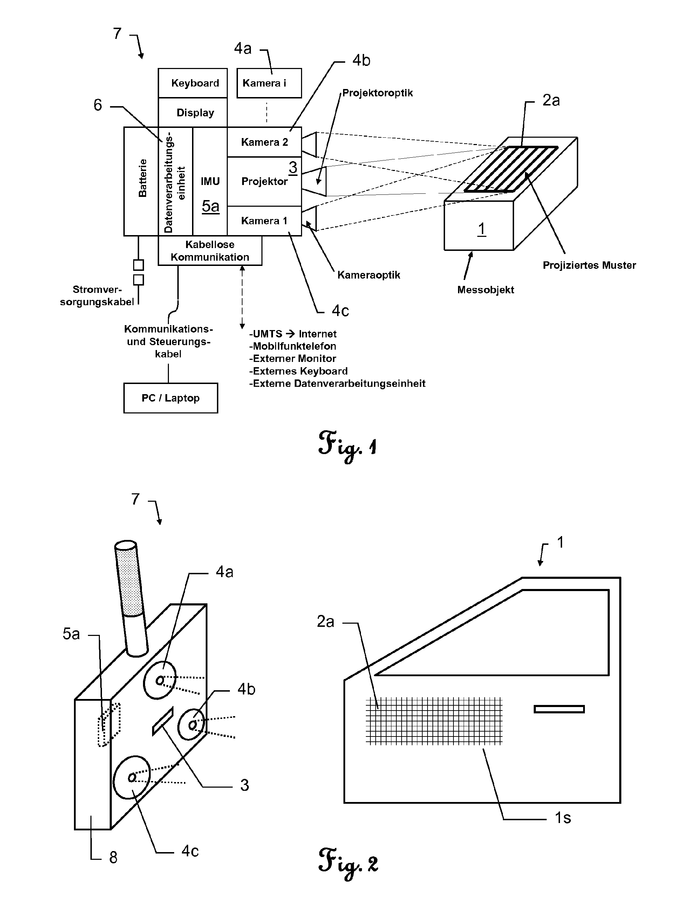

- Fig. 1: ein optisches Messsystem zur Bestimmung von 3D-Koordinaten, wobei erfindungsgemäss eine inertiale Messeinheit (IMU) in den Fig. 2 handhaltbaren Messkopf integriert ist; ein erfindungsgemässes optisches Messsystem mit handhaltbarem und IMU, Projektor sowie drei Kameras aufweisendem Messkopf, wobei eine Autotüre als Messobjekt im Rahmen der 3D-Koordinatenbestimmung mit einem Muster beleuchtet wird;

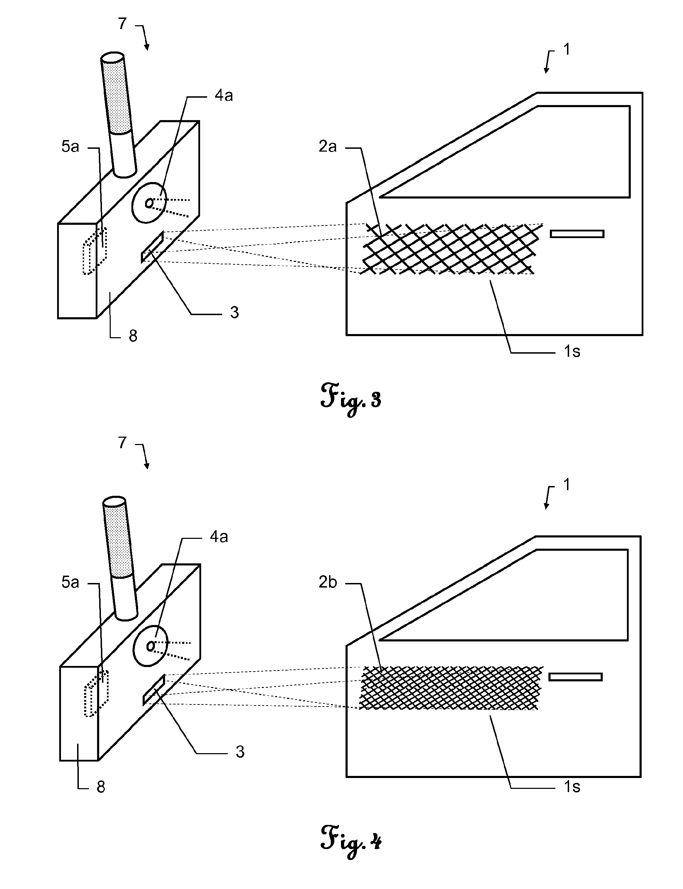

- Fig. 3 und 4: ein erfindungsgemässes optisches Messsystem mit handhaltbarem und IMU, Projektor sowie eine Kamera aufweisendem Messkopf, wobei eine Autotüre als Messobjekt nacheinander mit unterschiedliche Feinheitsgrade aufweisenden Mustern beleuchtet wird;

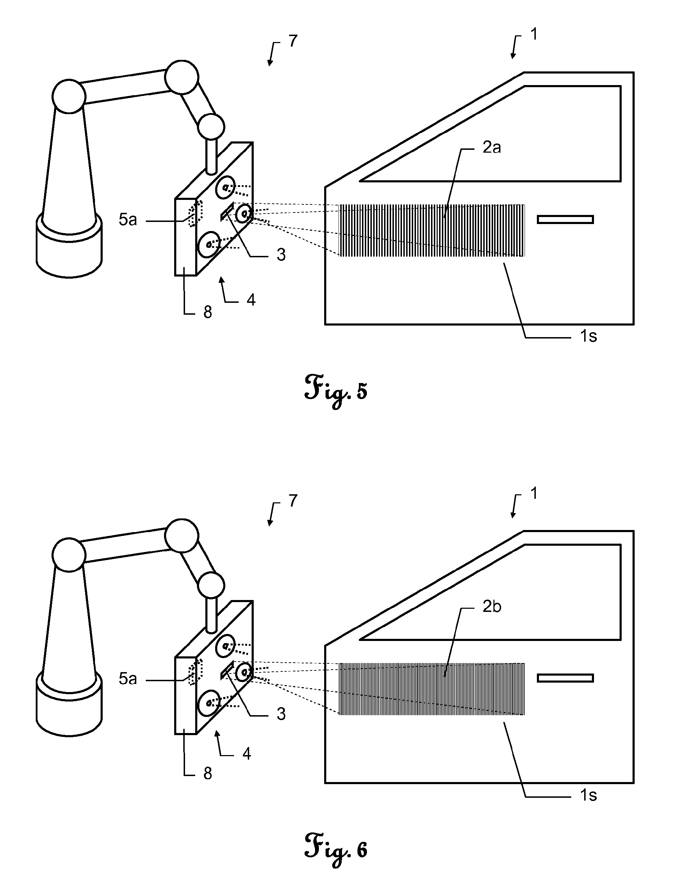

- Fig. 5 und 6: ein erfindungsgemässes optisches Messsystem mit roboterarmgehaltenem Messkopf, wobei eine Autotüre als Messobjekt nacheinander mit unterschiedliche Feinheitsgrade aufweisenden Strichmustern beleuchtet wird;

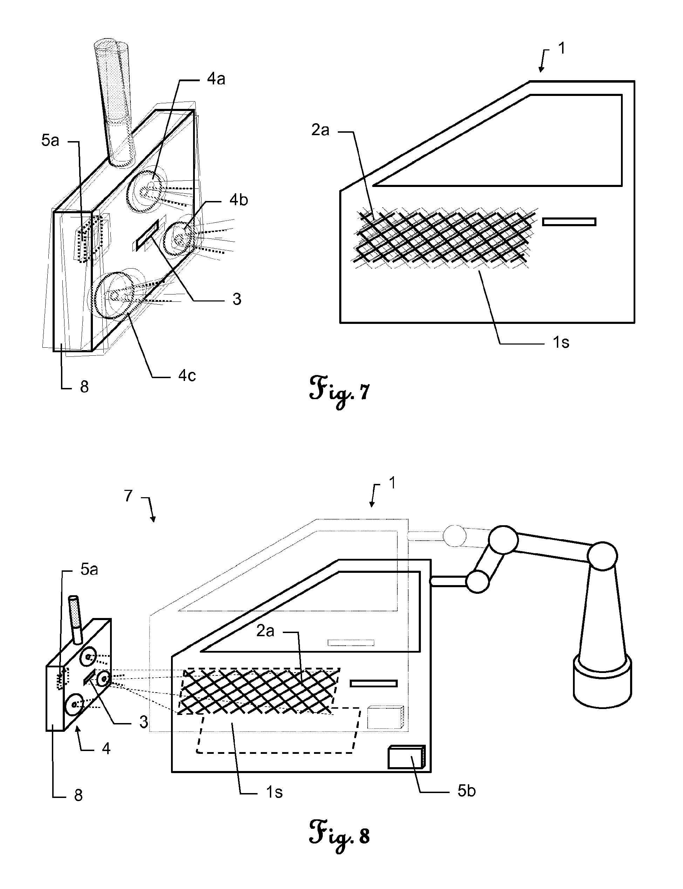

- Fig. 7: ein erfindungsgemässes optisches Messsystem mit handhaltbarem Messkopf, wobei ein handtremorbedingtes Unruhighalten während der Messung veranschaulicht ist;
- Fig. 8: ein erfindungsgemässes optisches Messsystem mit am Messobjekt angeordneter IMU, wobei das Messobjekt zur Vergrösserung des Messbereichs in unterschiedliche Stellungen gebracht wird und die in den unterschiedlichen Stellungen aufgenommenen Bilder anhand der gemessenen Beschleunigungen verknüpft werden;

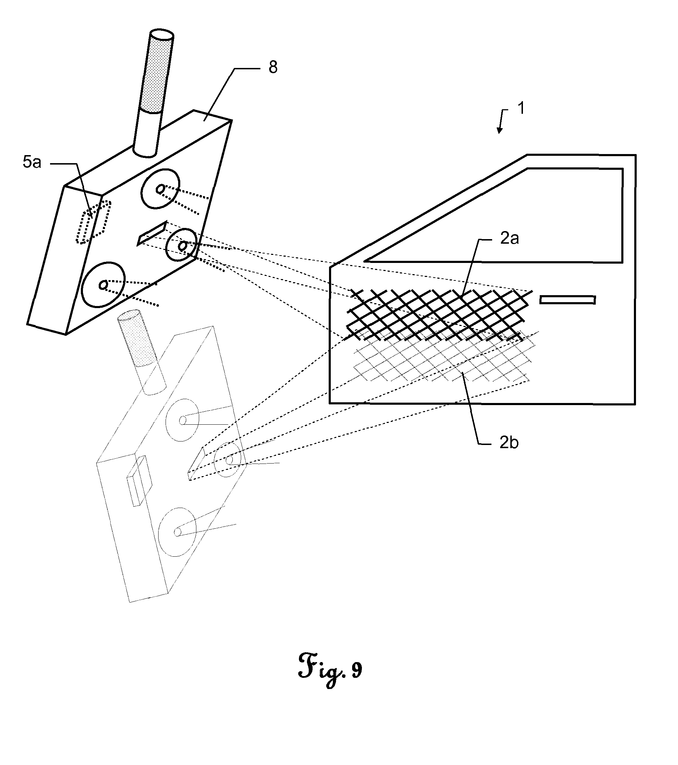

- Fig. 9: ein erfindungsgemässes optisches Messsystem mit handhaltbarem und IMU-aufweisendem Messkopf, wobei der Messkopf zur Vergrösserung des Messbereichs in unterschiedliche Stellungen gebracht wird und die in den unterschiedlichen Stellungen aufgenommenen Bilder anhand der gemessenen Beschleunigungen verknüpft werden; und

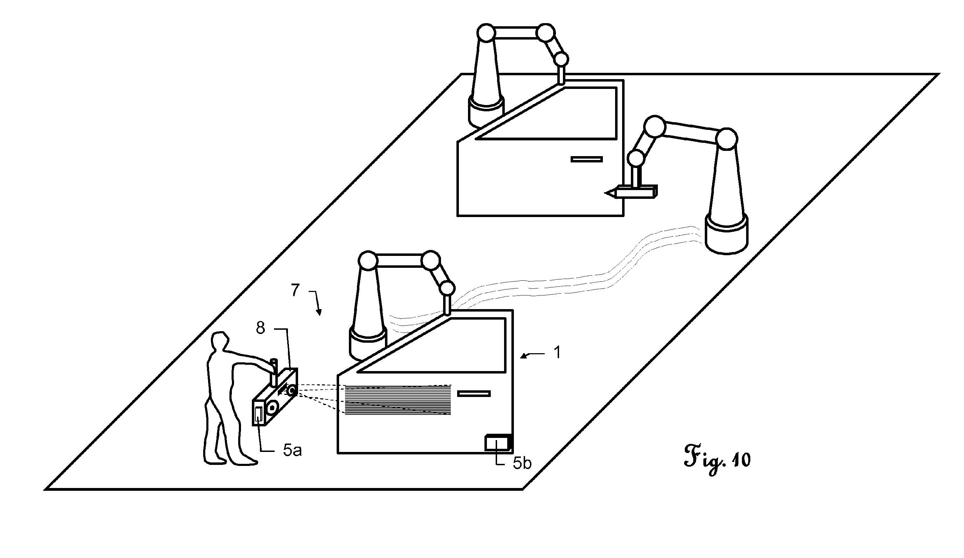

- Fig. 10: ein erfindungsgemässes optisches Messsystem in Anwendung in einer Produktionsstrasse, wobei die sich auf Messungen mit dem erfindungsgemässen Messsystem auswirkenden Vibrationen, die von einer benachbarten Produktionsstation übertragen werden, anhand der gemessenen Beschleunigungen kompensiert werden.

Das in Figur 1 dargestellte optische Messsystem 7 zur Bestimmung von 3D-Koordinaten von einer Vielzahl von Messpunkten einer Messobjekt-Oberfläche 1s weist erfindungsgemäss einen Projektor 3, ein Kamerasystem 4, eine Auswerteeinheit 6 sowie in eine inertiale Messeinheit (IMU) integrierte Inertialsensoren 5a auf.

Der Projektor 3 ist dabei zur Beleuchtung der Messobjekt-Oberfläche 1s mit einer Muster-Sequenz aus unterschiedlichen optischen Mustern 2a ausgebildet. Beispielsweise kann der Musterprojektor 3 ähnlich dem Prinzip eines Diaprojektors aufgebaut sein. Es können jedoch auch andere Projektionstechniken zur Erzeugung der Lichtmuster 2a eingesetzt werden, beispielsweise programmierbare LCD-Projektoren, verschiebliche Glasträger mit unterschiedlichen Gitterstrukturen in einem Projektor, eine Kombination eines elektrisch schaltbaren Gitters und einer mechanischen Verschiebeeinrichtung oder auch die Projektion von Einzelgittern auf der Basis von Glasträgern.

Das Kamerasystem 4 ist zur Aufnahme einer Bild-Sequenz von der mit der Muster-Sequenz beleuchteten Messobjekt-Oberfläche 1s ausgebildet und kann dabei zumindest eine Kamera aufweisen, insbesondere jedoch zwei, drei oder vier Kameras 4a,4b,4c, die beispielsweise mit fixer und bekannter Positionierung und Orientierung relativ zueinander angeordnet sein können und im Speziellen zur im Wesentlichen simultan erfolgenden Aufnahme von Einzelbildern ausgebildet sind.

Wie dem Fachmann bekannt können zur Bildaufzeichnung beispielsweise Kameras 4a,4b,4c mit elektronischem Bildsensor, z.B. CCD- oder CMOS-Sensoren, verwendet werden, welche die Bildinformation in Form einer Bildmatrix für die weitere Verarbeitung zur Verfügung stellen. Es können dabei sowohl monochrome Kameras als auch Farbkameras zum Einsatz kommen.

Die Auswerteeinheit 6 ist zur Bestimmung der 3D-Koordinaten der Messpunkte aus der Bild-Sequenz ausgebildet, insbesondere unter Ermittlung einer Folge von Helligkeitswerten für identische Messpunkte der Messobjekt-Oberfläche 1s in jeweiligen Bildern der aufgenommenen Bild-Sequenz.

Der Projektor 3 und das Kamerasystem 4 sind ausführungsbeispielgemäss mit fixer und bekannter Positionierung und Orientierung relativ zueinander körperlich in einem gemeinsamen Messkopf 8 des Messsystems 7 untergebracht, insbesondere wobei der Messkopf 8 handhaltbar und/oder zum Anbringen an einen Roboterarm ausgebildet ist.

Erfindungsgemäss ist in den Messkopf 8 auch die Inertialsensoren 5a aufweisende IMU integriert, wobei die Inertialsensoren 5a somit zur Messung von translatorischen und rotatorischen Beschleunigungen des Messkopfes 8 (d.h. des Projektors 3 und des Kamerasystems 4) beim Aufnehmen der Bild-Sequenz ausgebildet sind. Die Auswerteeinheit 6 berücksichtigt nun bei der Bestimmung der 3D-Koordinaten aus der Bild-Sequenz die durch die Inertialsensoren 5a gemessen Beschleunigungen.

Die Inertialsensoren 5a der inertialen Messeinheit können dabei insbesondere auf MEMS-basierten Komponenten basieren und derart kombiniert und in die IMU integriert sein, dass die diese zur Messung der Beschleunigungen in allen sechs Freiheitsgraden ausgebildet ist, insbesondere mit einer Messrate etwa zwischen 1 und 2000 Hz, im Speziellen zwischen 50 und 2000 Hz.

Insbesondere automatisch und vorprogrammiert gesteuert durch die Auswerteeinheit 6 kann somit das dargestellte optische Messsystem 7 zur Durchführung des erfindungsgemässen optischen Messverfahrens - wie bereits obig beschrieben - ausgebildet und ausgelegt ist.

Das in Figur 2 gezeigte Ausführungsbeispiel eines erfindungsgemässen optischen Messsystems 7 weist einen handhaltbaren und IMU (mit Inertialsensoren 5a), Projektor 3 sowie drei Kameras 4a,4b,4c umfassenden Messkopf 8 (z.B. integriert in ein handhaltbares Gehäuse mit Griff und somit als Lichtstrukturen-3D-Handscanner ausgebildet) auf, wobei eine Autotüre als Messobjekt 1 im Rahmen der 3D-Koordinatenbestimmung anhand des Projektors 3 mit einem Muster 2a (als Teil einer Muster-Sequenz) beleuchtet wird.

Die drei Kameras 4a,4b,4c des Kamerasystems 4, die hier beispielhaft mit fixer und bekannter Positionierung und Orientierung relativ zueinander angeordnet sind, sind zur Aufnahme einer Bild-Sequenz von der mit der Muster-Sequenz beleuchteten Autotür-Oberfläche ausgebildet. Die Kameras 4a,4b,4c können dabei zur im Wesentlichen simultan erfolgenden Aufnahme von Einzelbildern ausgebildet sein.

Zudem ist wiederum eine inertiale Messeinheit (mit Inertialsensoren 5a) in den Messkopf 8 integriert, wodurch ein erfindungsgemässes Kompensieren von z.B. durch handtremorbedingtes Unruhighalten bewirkten Messfehlern im Rahmen der Auswertung der Bild-Sequenz und der Ableitung der 3D-Koordinaten erfolgen kann. Insbesondere automatisch und vorprogrammiert gesteuert durch die Auswerteeinheit kann das dargestellte optische Messsystem 7 zur Durchführung des erfindungsgemässen optischen Messverfahrens - wie obig beschrieben - ausgebildet und ausgelegt sein.

Figuren 3 und 4 zeigen ein erfindungsgemässes optisches Messsystem 7 mit handhaltbarem und IMU (mit Inertialsensoren 5a), Projektor 3 sowie eine Kamera 4a aufweisendem Messkopf 8 (z.B. integriert in ein handhaltbares Gehäuse mit Griff und somit als Lichtstrukturen-3D-Handscanner ausgebildet), wobei eine Autotüre als Messobjekt 1 nacheinander mit unterschiedliche Feinheitsgrade aufweisenden Mustern 2a,2b als Teil der Muster-Sequenz; Figur 3: gröberes Muster 2a; und Figur 4: feiner strukturiertes Muster 2b) beleuchtet wird.

Wie aus dem Stand der Technik bekannt erfolgt also eine Beleuchtung des Objekts (z.B. Autotüre) mit einer Sequenz von Lichtmustern 2a,2b unterschiedlicher Strukturenfeinheit, um eine eindeutige Tiefenbestimmung der Messpunkte im Messbereich mit Hilfe von Triangulation (Vorwärtsschnitt) zu erhalten. Es werden dabei auch mehrere Bild-Aufnahmen gemacht (d.h. eine Serie von Bildern) unter Beleuchtung des Messobjekts 1 mit den entsprechenden unterschiedlichen Mustern 2a,2b (d.h. mit der Serie von Mustern).

Erfindungsgemäss ist dabei wiederum eine inertiale Messeinheit (mit Inertialsensoren 5a) in den Messkopf 8 des in den Figuren 3 und 4 dargestellten 3D-Scanner integriert, wodurch ein erfindungsgemässes Kompensieren von z.B. durch handtremorbedingtes Unruhighalten bewirkten Messfehlern im Rahmen der Auswertung der Bild-Sequenz und der Ableitung der 3D-Koordinaten erfolgen kann. Insbesondere automatisch und vorprogrammiert gesteuert durch die Auswerteeinheit kann das dargestellte optische Messsystem 7 zur Durchführung einzelner oder mehrerer der oben beschriebenen Ausführungsformen des erfindungsgemässen optischen Messverfahrens (z.B. nach einem der Ansprüche 1 bis 8) ausgebildet und ausgelegt sein.

In den Figuren 5 und 6 ist ein erfindungsgemässes optisches Messsystem 7 ähnlich dem aus Figuren 3 und 4 gezeigt, ausser dass der Messkopf 8 hier als roboterarmgehaltener Messkopf 8 ausgebildet ist und der Projektor 3 zum nacheinander erfolgenden Projizieren von unterschiedliche Feinheiten aufweisende Streifenmuster 2a,2b als Muster-Sequenz ausgebildet ist.

Erfindungsgemäss weist auch der in den Figuren 3 und 4 dargestellte Messkopf 8 eine inertiale Messeinheit IMU (mit Inertialsensoren 5a) auf, wodurch ein erfindungsgemässes Kompensieren von Messfehlern, die z.B. durch auf den Roboterarm aus der Messbereichumgebung übertragene Vibrationen bewirkt werden, im Rahmen der Auswertung der Bild-Sequenz und der Ableitung der 3D-Koordinaten erfolgen kann. Alternativ oder zusätzlich können die gemessenen Beschleunigungen auch zum räumlichen Zusammenfügen ("Stitchen") einzelner aus unterschiedlicher Roboterarmpositionen erfasster Einzelbilder (als Teil einer oder mehrerer Bild-Sequenzen) verwendet werden, sodass - je nach Wahl der unterschiedlichen Aufnahmepositionen, die durch den Fachmann anforderungsgemäss angepasst werden kann - dadurch der Messbereich vergrössert und/oder verdichtet werden kann, oder aber ein Verändern von im Falle des Beleuchtens mit im Wesentlichen kohärenter optischer Strahlung ungewollt auftretenden Specklefeldern in den jeweiligen Mustern 2a,2b der Muster-Sequenz und somit ein Verringern von durch solche Specklefelder hervorgerufene lokale Messungenauigkeiten oder Messpunkt-Lücken erfolgen kann.

Figuren 7 und 9 zeigen ein ähnliches Messsystem 7 wie aus Figur 1 und veranschaulichen dabei ein (unabsichtlich handtremorbedingtes oder - z.B. zu Zwecken des Verdichtens oder Vergrösserns des Messbereichs - absichtliches) Unruhighalten/Bewegen des Messkopfes 8 während einer Messung. Die anhand der IMU (mit Inertialsensoren 5a) gemessenen Beschleunigungen können dann zum räumlichen Zusammenfügen ("Stitchen") der einzelnen aus unterschiedlichen Handhaltepositionen erfassten Einzelbilder (als Teil einer oder mehrerer Bild-Sequenzen) verwendet werden.

Zudem kann dabei jedoch auch ein Verwackeln einzelner Muster-Projektionen 2a,2b (einer Muster-Sequenz) auf dem Messobjekt 1 und ein Verwackeln einzelner Bildaufnahmen (einer Bild-Sequenz) bewirkt werden, wobei die durch das Verwackeln verursachten Fehler im Bild ebenso erfindungsgemäss anhand der durch die im Messkopf 8 integrierte IMU gemessenen Beschleunigungen korrigiert oder im Rahmen der 3D-Koordinatenbestimmung kompensiert bzw. berücksichtigt werden können.

Figur 8 stellt ein erfindungsgemässes optisches Messsystem 7 dar mit am Messobjekt 1 angeordneter IMU (mit Inertialsensoren 5b), wobei das Messobjekt 1 z.B. zur Vergrösserung des Messbereichs in unterschiedliche Stellungen gebracht werden kann und - erfindungsgemäss - die in den einzelnen Bildern (der Bild-Sequenz) aufgenommenen unterschiedlichen Stellen des Messobjekts 1 anhand der IMU-gemessenen Beschleunigungen verknüpft und in räumlichen Bezug miteinander gebracht werden können.

Zusätzlich zu der IMU (mit Inertialsensoren 5b) am Messobjekt 1 kann auch wiederum im Messkopf 8 selbst eine IMU (mit Inertialsensoren 5a) integriert sein. Dadurch können - wie oben beschrieben - zudem auch während der Messung auftretende Bewegungen des Messkopfes 8 erfindungsgemäss beim Bestimmen der Tiefeninformationen und der 3D-Koordinaten mitberücksichtigt werden.

Figur 10 zeigt ein erfindungsgemässes optisches Messsystem 7 in Anwendung in einer Produktionsstrasse, wobei die sich auf Messungen mit dem erfindungsgemässen Messsystem 7 auswirkenden Vibrationen, die von einer benachbarten Produktionsstation übertragen werden, anhand der gemessenen Beschleunigungen kompensiert werden.

Dafür kann erfindungsgemäss - wie z.B. auch in Verbindung mit Figur 8 oben beschrieben - sowohl am Messobjekt 1 als auch integriert in den Messkopf 8 (der hier rein beispielhaft zwei Kameras aufweist) jeweils eine IMU (mit Inertialsensoren 5a bzw. 5b) angeordnet sein, wodurch ein erfindungsgemässes Kompensieren von Messfehlern, die z.B. durch auf den Roboterarm aus der Messbereichumgebung übertragene Vibrationen und durch Unruhighalten des Messkopfes 8 bewirkt werden, im Rahmen der Auswertung der Bild-Sequenz und der Ableitung der 3D-Koordinaten erfolgen kann.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Optisches Messverfahren zum Bestimmen von 3D-Koordinaten von einer Vielzahl von Messpunkten einer Messobjekt-Oberfläche (1s),
mit den Schritten
• Beleuchten der Messobjekt-Oberfläche (1s) mit einer Muster-Sequenz aus unterschiedlichen Mustern (2a,2b) durch einen Projektor (3),
• Aufnehmen einer Bild-Sequenz von der mit der Muster-Sequenz beleuchteten Messobjekt-Oberfläche (1s) mit einem Kamerasystem (4), und
• Bestimmen der 3D-Koordinaten der Messpunkte durch Auswerten der Bild-Sequenz, insbesondere wobei eine Folge von Helligkeitswerten für identische Messpunkte der Messobjekt-Oberfläche (1s) in jeweiligen Bildern der aufgenommenen Bild-Sequenz ermittelt wird,
**dadurch gekennzeichnet, dass**
beim Aufnehmen der Bild-Sequenz translatorische und/oder rotatorische Beschleunigungen
• des Projektors (3),
• des Kamerasystems (4) und/oder
• des Messobjekts (1)
gemessen werden und die gemessenen Beschleunigungen beim Bestimmen der 3D-Koordinaten berücksichtigt werden, insbesondere wobei das Bestimmen der 3D-Koordinaten der Messpunkte in Abhängigkeit von den gemessenen Beschleunigungen erfolgt.

2. Optisches Messverfahren nach Anspruch 1,
**dadurch gekennzeichnet, dass**
Beschleunigungen des Projektors (3), des Kamerasystems (4) bzw. des Messobjekts (1) in allen sechs Freiheitsgraden gemessen werden und das Messen der Beschleunigungen fortlaufend mit einer bestimmten Messrate, insbesondere zwischen etwa 1 und 2000 Hz, im Speziellen zwischen etwa 50 und 2000 Hz, zumindest während der Belichtungszeiten der einzelnen Bilder der Bild-Sequenz erfolgt, im Speziellen während des gesamten Vorgangs des Aufnehmens der Bild-Sequenz.

3. Optisches Messverfahren nach Anspruch 1 oder 2,
**dadurch gekennzeichnet, dass**
Verwacklungen und/oder Bewegungsunschärfe im Bild provozierende Bewegungen des Projektors (3), des Kamerasystems (4) und/oder des Messobjekts (1) während der Belichtungszeiten der einzelnen Bilder der Bild-Sequenz anhand der gemessenen Beschleunigungen algorithmisch berücksichtigt werden, insbesondere zum Kompensieren oder Korrigieren von dadurch bewirkten Verwacklungen und/oder Bewegungsunschärfen in den einzelnen Bildern,
im Speziellen wobei die Bewegungen hervorgerufen werden
• durch einen den Projektor (3), das Kamerasystem (4) und/oder das Messobjekt (1) handhaltenden Benutzer, insbesondere handtremorbedingt und unabsichtlich, oder
• durch Vibrationen oder Schwingungen in den Halterungen des Projektors (3), des Kamerasystems (4) und/oder des Messobjekts (1).

4. Optisches Messverfahren nach einem der Ansprüche 1 bis 3,
**dadurch gekennzeichnet, dass**
während des gesamten Vorgangs des Aufnehmens der Bild-Sequenz oder mehrerer Bild-Sequenzen die Beschleunigungen gemessen werden und die durch das Auswerten der einzelnen Bilder bezüglich der 3D-Koordinaten der Messpunkte gewonnene Informationen rechnerisch zusammengefügt werden unter Zuhilfenahme der gemessenen Beschleunigungen,
insbesondere wobei während des Vorgangs des Aufnehmens
• zum Vergrössern des Messbereichs auf der Messobjekt-Oberfläche (1s),
• zum Verdichten des Messbereichs und somit zur Erhöhung der Messpunkte-Dichte auf der Messobjekt-Oberfläche (1s) und/oder
• zum Verändern von im Falle des Beleuchtens mit im Wesentlichen kohärenter optischer Strahlung ungewollt auftretenden Specklefeldern in den jeweiligen Mustern (2a,2b) der Muster-Sequenz und somit zur Verringerung von durch solche Specklefelder hervorgerufene lokale Messungenauigkeiten oder Messpunkt-Lücken
das Messobjekt (1), das Kamerasystem (4) und/oder der Projektor (3) bewegt wird,
im Speziellen wobei das zu diesem Zweck erfolgende Bewegen bewirkt wird durch
• einen das Messobjekt (1) bzw. das Kamerasystem (4) handhaltenden Benutzer, und/oder
• eine dafür ausgelegte und vorprogrammiert automatisch oder manuell gesteuerte Halterung - insbesondere ein Roboterarm - für den Projektor (3), das Kamerasystem (4) und/oder das Messobjekt (1).

5. Optisches Messverfahren nach Anspruch 4,
**dadurch gekennzeichnet, dass**
für das rechnerische Zusammenfügen als Startbedingungen aus den gemessenen Beschleunigungen abgeleitete räumliche Bezüge zwischen den einzelnen aufgenommenen Bilder untereinander hinsichtlich deren Aufnahmepositionen und -richtungen relativ zum Messobjekt (1) herangezogen werden, sodass das rechnerische Zusammenfügen an sich einen - gegenüber einem unter Nichtheranziehung solcher Startbedingungen erfolgenden Verfahren - verringerten rechnerischen Aufwand bedarf.

6. Optisches Messverfahren nach einem der Ansprüche 1 bis 5,
**dadurch gekennzeichnet, dass**
das Bestimmen der 3D-Koordinaten der Messpunkte photogrammetrisch nach dem Triangulationsprinzip aus der Bild-Sequenz und unter Kenntnis des in den jeweiligen Bildern der Bild-Sequenz erfassten Musters der Muster-Sequenz erfolgt, insbesondere vermittels Vorwärtsschnitt.

7. Optisches Messverfahren nach einem der Ansprüche 1 bis 6,
**dadurch gekennzeichnet, dass**
das Beleuchten und das Aufnehmen von relativ zueinander bekannten Positionen aus und mit relativ zueinander bekannten Ausrichtungen erfolgt, insbesondere wobei das Aufnehmen mit mehreren Kameras (4a,4b,4c) als Teile des Kamerasystems (4) von unterschiedlichen Positionen aus erfolgt.

8. Optisches Messverfahren nach einem der Ansprüche 1 bis 7,
**dadurch gekennzeichnet, dass**
die Messobjekt-Oberfläche (1s) nacheinander mit
• Streifenmustern unterschiedlichen Feinheitsgrads,
• Pseudocodes und/oder
• Random Patterns
als die unterschiedlichen Muster der Muster-Sequenz beleuchtet wird, insbesondere wobei das Beleuchten mit den einzelnen Mustern (2a,2b) im Wesentlichen zeitlich direkt aufeinander folgend mit einer Projektionsdauer von etwa zwischen 100 und 300 ms, im Speziellen etwa 200 ms, und das Aufnehmen der Bild-Sequenz mit einer Belichtungsdauer pro Bild von jeweils etwa zwischen 100 und 300 ms, im Speziellen etwa 200 ms, erfolgt.

9. Optisches Messsystem (7) zur Bestimmung von 3D-Koordinaten einer Vielzahl von Messpunkten einer Messobjekt-Oberfläche (1s),
mit
• einem Projektor (3) zur Beleuchtung der Messobjekt-Oberfläche (1s) mit einer Muster-Sequenz aus unterschiedlichen optischen Mustern (2a,2b),
• einem Kamerasystem (4) zur Aufnahme einer Bild-Sequenz von der mit der Muster-Sequenz beleuchteten Messobjekt-Oberfläche (1s), und
• einer Auswerteeinheit zur Bestimmung der 3D-Koordinaten der Messpunkte aus der Bild-Sequenz, insbesondere unter Ermittlung einer Folge von Helligkeitswerten für identische Messpunkte der Messobjekt-Oberfläche (1s) in jeweiligen Bildern der aufgenommenen Bild-Sequenz,
**dadurch gekennzeichnet, dass**
• am Projektor (3),
• am Kamerasystem (4) und/oder
• am Messobjekt (1)
Inertialsensoren (5a,5b) angeordnet sind zur Messung von translatorischen und rotatorischen Beschleunigungen des Projektors (3), des Kamerasystems (4) und/oder des Messobjekts (1) beim Aufnehmen der Bild-Sequenz, und dass
die Auswerteeinheit (6) ausgebildet ist zur Berücksichtigung der durch die Inertialsensoren (5a,5b) gemessen Beschleunigungen bei der Bestimmung der 3D-Koordinaten.

10. Optisches Messsystem (7) nach Anspruch 9,
**dadurch gekennzeichnet, dass**
die Inertialsensoren (5a,5b) in einer - insbesondere auf MEMS-basierten Komponenten beruhenden - inertialen Messeinheit derart kombiniert und integriert sind, dass die inertiale Messeinheit zur Messung der Beschleunigungen in allen sechs Freiheitsgraden ausgebildet ist, insbesondere mit einer Messrate von etwa 50 bis 2000 Hz.

11. Optisches Messsystem (7) nach Anspruch 9 oder 10,
**dadurch gekennzeichnet, dass**
dass der Projektor (3) und das Kamerasystem (4) mit fixer und bekannter Positionierung und Orientierung relativ zueinander körperlich in einem gemeinsamen Messkopf (8) des Messsystems untergebracht sind, in dem auch die Inertialsensoren (5a,5b) angeordnet sind, insbesondere wobei der Messkopf (8) handhaltbar und/oder zum Anbringen an einen Roboterarm ausgebildet ist.

12. Optisches Messsystem (7) nach einem der Ansprüche 9 bis 11,
**dadurch gekennzeichnet, dass**
das Kamerasystem (4) zumindest eine Kamera (4a,4b,4c) aufweist, insbesondere wobei das Kamerasystem (4) zwei, drei oder vier Kameras (4a,4b,4c) beinhaltet, die mit fixer und bekannter Positionierung und Orientierung relativ zueinander angeordnet sind und zur im Wesentlichen simultan erfolgenden Aufnahme von Einzelbildern ausgebildet sind.

13. Optisches Messsystem (7) nach einem der Ansprüche 9 bis 12,
**dadurch gekennzeichnet, dass**
dieses zur Durchführung des optischen Messverfahrens nach einem der Ansprüche 1 bis 8 ausgebildet und ausgelegt ist.
